# FASCICULE DE BREVET EUROPEEN

(11) **EP 1 168 708 B1**
(45) Date de publication et mention de la délivrance du brevet: **07.12.2005**
(21) Numéro de dépôt: 01401327.0
(22) Date de dépôt: 21.05.2001
(51) Int. Cl.: H04L 12/10, H04L 12/44, H04L 12/12

(54) **Procédé et dispositif pour réinitialiser des terminaux raccordés à un réseau local**
Verfahren und Vorrichtung zur Neustartung von Geräten eines lokalen Netz
Method and device to reboot terminals connected to a local network

(30) Priorité: 19.06.2000 FR 0007790
(43) Date de publication de la demande: 02.01.2002
(73) Titulaire: ALCATEL, 75008 Paris (FR)
(72) Inventeur: Mouton, Michel, 67100 Strasbourg (FR)
(74) Mandataire: Sciaux, Edmond

(56) Documents cités:
- EP-A- 0 981 227
- US-A- 5 742 514
- US-A- 5 835 719

## Description

L'invention concerne un procédé pour réinitialiser des terminaux raccordés à un réseau local, et des dispositifs pour la mise en oeuvre de ce procédé (Concentrateurs, et terminaux). Elle concerne plus particulièrement les réseaux locaux permettant de téléalimenter des terminaux, notamment les réseaux locaux du type Ethernet, capables de téléalimenter des terminaux.

De nombreux types de terminaux peuvent être raccordés à un tel réseau (par exemple des téléphones utilisant le protocole Internet), et il est parfois nécessaire de réinitialiser certains terminaux pour qu'ils redémarrent avec une nouvelle configuration, par exemple après qu'un administrateur de réseau ait commandé à distance le téléchargement d'un logiciel. Souvent, la seule façon de ré-initialiser un terminal consiste à l'éteindre manuellement puis le rallumer. En effet, les processeurs et les circuits logiques comportent un dispositif qui les réinitialise automatiquement quand la tension d'alimentation passe de zéro à sa valeur nominale.

D'autre part, il est parfois nécessaire d'éteindre tous les terminaux, ou certains terminaux, pour des opérations de maintenance du réseau. Habituellement, une personne se déplace auprès de chaque terminal pour l'éteindre, ou bien demande à chaque utilisateur de bien vouloir éteindre son terminal. Cette opération coûte du temps s'il y a de nombreux terminaux à éteindre. Il est souhaitable de pouvoir réinitialiser aussi les concentrateurs.

On connaît un dispositif, tel que celui décrit dans le brevet US5835719, pour réinitialiser des terminaux raccordés à un réseau local, comportant des moyens diffusant dans ce réseau des paquets de données télécommandant une coupure de l'alimentation locale dans chaque terminal, et éventuellement dans les concentrateurs. Ce dispositif a pour inconvénient d'être inopérant si l'exécution d'un logiciel a provoqué un blocage dans ce terminal (par exemple par un rebouclage accidentel).

Le but de l'invention est de proposer un procédé et des dispositifs plus simples permettant la réinitialisation de nombreux terminaux et concentrateurs, à partir d'un point central, et ne présentant pas cet inconvénient.

Un premier objet de l'invention est un procédé pour réinitialiser des terminaux raccordés à un réseau local capable de téléalimenter des terminaux à partir d'au moins un dispositif de téléalimentation, **caractérisé** en ce qu'il consiste à commander une réinitialisation de terminaux en utilisant comme signal de commande une coupure de la téléalimentation fournie à ces terminaux par un dispositif de téléalimentation.

Le procédé ainsi caractérisé n'utilise pas la transmission de données sur le réseau, mais une transmission de signalisation complètement indépendante de la transmission de données, via les moyens de téléalimentation, ce qui lui permet de commander une réinitialisation même si l'exécution d'un logiciel a provoqué un blocage du processeur du terminal.

L'invention a aussi pour objet un concentrateur pour réseau local, capable de réinitialiser des terminaux raccordés à ce réseau local, comportant un dispositif de téléalimentation pour téléalimenter des concentrateurs et/ou des terminaux, situés en aval ; **caractérisé** en ce qu'il comporte en outre des moyens pour commander une coupure de la téléalimentation des terminaux et/ou des concentrateurs situés en aval.

L'invention a aussi pour objet un terminal susceptible d'être raccordé à un réseau local capable de téléalimenter un terminal en cas de défaillance de l'alimentation locale, ce terminal comportant : un dispositif d'alimentation comportant des moyens d'alimentation locale, et des moyens de couplage au réseau local ; **caractérisé** en ce qu'il comporte en outre des moyens de détection pour détecter que ce terminal ne reçoit plus de téléalimentation fournie par le réseau, et des moyens pour réinitialiser ce terminal, lorsque ces moyens de détection détectent que ce terminal ne reçoit plus de téléalimentation fournie par le réseau.

L'invention sera mieux comprise et d'autres caractéristiques apparaîtront à l'aide de la description ci-dessous et des figures l'accompagnant :
- La figure 1 représente le schéma synoptique d'un exemple de réseau local adapté pour la téléalimentation, et comportant des concentrateurs et des terminaux selon l'invention.
- La figure 2 représente le schéma synoptique d'un exemple de réalisation du terminal selon l'invention.
- La figure 3 représente le schéma synoptique d'une variante de cet exemple de réalisation du terminal selon l'invention.

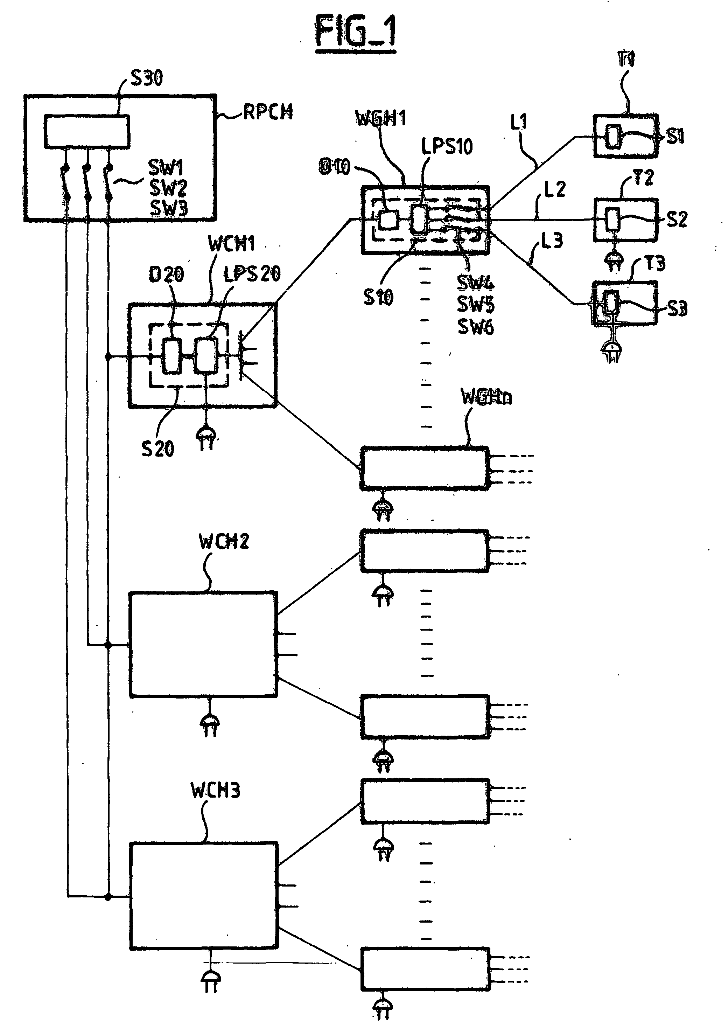

L'exemple de réseau local qui est représenté sur la **figure 1** est un réseau Ethernet qui comporte :
- un concentrateur principal RPCH dit de commande de la téléalimentation, qui est raccordé à un commutateur Ethernet (non représenté) et qui permet de réinitialiser tout ou partie du réseau ;
- trois concentrateurs dits d'armoire de répartiteur, WCH1, WCH2, WCH3, qui desservent respectivement trois étages d'un bâtiment, par exemple, et qui sont raccordés respectivement à trois ports du concentrateur RPCH ;
- des concentrateurs de groupe de travail, WGH1 etc..., raccordés respectivement à des ports des trois concentrateurs d'armoire de répartiteur, WCH1, WCH2, WCH3.

Par exemple, n concentrateurs de groupe de travail WGH1,..., WGHn sont raccordés respectivement à n ports du concentrateur d'armoire de répartiteur, WCH1. Chaque concentrateur de groupe de travail WGH1, ..., WGHn a plusieurs ports. Chacun de ces ports est raccordé à un seul terminal. Par exemple, trois lignes L1, L2, L3 sont branchées respectivement sur trois ports du concentrateur WGH1. Parmi les terminaux, certains comme T1 sont des terminaux alimentés seulement par téléalimentation ; d'autres, comme T2, sont alimentés localement par le secteur et n'utilisent aucunement la téléalimentation ; et enfin d'autres, comme T3, sont alimentés localement mais sont secourus en cas de panne de secteur, au moins pour alimenter des fonctions essentielles, au moyen de la téléalimentation par le réseau. Selon l'invention, ces derniers comportent chacun un dispositif d'alimentation, tel que S3 dans le terminal T3, qui permet de les réinitialiser à distance.

Sur cette figure 1, les concentrateurs et terminaux alimentables localement sont représentés avec une prise secteur.

Chaque terminal est raccordé par une prise RJ 45 à une ligne comportant huit conducteurs. Plusieurs procédés de téléalimentation sont envisageables. Une norme IEEE 802.3af est en cours d'élaboration en ce qui concerne les réseaux Ethernet. Une façon de transmettre un courant de téléalimentation consiste à utiliser deux des huit fils de la ligne : quatre autres de ces huit fils sont deux paires de fils utilisées respectivement pour transmettre et recevoir des données. Une autre façon, dite par circuit fantôme, consiste à relier les deux bornes d'un générateur d'alimentation respectivement aux points milieux d'un enroulement de transformateur raccordé à la paire de réception de données et d'un enroulement d'un autre transformateur raccordé à la paire d'émission de données, dans le dispositif de téléalimentation. Du côté du terminal, la tension d'alimentation est fournie respectivement par les points milieux d'un enroulement de transformateur raccordé à la paire de réception de données et d'un enroulement d'un autre transformateur raccordé à la paire d'émission de données.

La téléalimentation est fournie aux lignes L1, L2, L3 par un dispositif de téléalimentation S10 situé dans le concentrateur WGH1. Le dispositif S10 possède une alimentation locale LPS10 qui est alimentée en énergie par le secteur, et un détecteur de présence de téléalimentation, D10, raccordé à la ligne qui relie le concentrateur WGH1 au concentrateur WCH1. Le détecteur D10 est relié à une entrée de commande de l'alimentation locale LPS10 pour commander une coupure de la téléalimentation, fournie en aval par ce dispositif de téléalimentation S10, lorsque le concentrateur WGH1 ne reçoit plus la téléalimentation fournie par le concentrateur WCH1 situé en amont dans le réseau.

On peut prévoir en outre des commutateurs manuels, SW4, SW5, SW6,... dans chaque concentrateur de groupe de travail WGH1, ..., WGHn pour permettre de couper la téléalimentation respectivement sur les lignes L1, L2, L3, ... raccordées à ce concentrateur, afin de réinitialiser à distance un sous-ensemble du réseau qui peut être, à la limite, constitué d'un seul terminal.

Les trois concentrateurs d'armoire de répartiteur, WCH1, WCH2, WCH3 fournissent aussi une téléalimentation sur leurs ports. Cette téléalimentation pourrait alimenter des terminaux s'il y en avaient qui soient connectés directement sur ces ports, mais elle sert surtout à commander les dispositifs de téléalimentation, tels que S10, dans les n concentrateurs de groupe de travail WGH1,..., WGHn. Par exemple, lorsque le dispositif de téléalimentation S20 du concentrateur WCH1 ne fournit plus de téléalimentation aux n concentrateurs de groupe de travail WGH1,..., WGHn, les dispositifs de téléalimentation intégrés dans ceux-ci, notamment S10, cessent de téléalimenter les terminaux T1, T2, T3, etc... Les terminaux téléalimentés tels que T1 sont donc réinitialisés.

Par exemple, la téléalimentation fournie aux concentrateurs WGH1, ..., WGHn est produite par un dispositif de téléalimentation S20 situé dans le concentrateur WCH1. Le dispositif S20 possède une alimentation locale LPS20 alimentée en énergie par le secteur, et un détecteur de présence de téléalimentation D20 qui est raccordé à la ligne qui relie le concentrateur WCH1 au concentrateur RPCH. Le détecteur D20 est relié à une entrée de commande de l'alimentation locale LPS20 pour commander une coupure de la téléalimentation fournie en aval par ce dispositif de téléalimentation S20 lorsque le concentrateur WCH1 ne reçoit plus la téléalimentation fournie par le concentrateur RPCH situé en amont dans le réseau.

Dans les terminaux selon l'invention, alimentés localement mais secourus par téléalimentation, tels que T3, le dispositif d'alimentation tel que S3 dans le terminal T3, détecte la disparition de la téléalimentation et cette détection déclenche une réinitialisation de ce terminal.

Dans chacun des terminaux, tels que T1, qui sont alimentés uniquement par la téléalimentation, une coupure de la téléalimentation provoque une réinitialisation, lors de la reprise de la téléalimentation.

Dans chacun des terminaux qui sont alimentés localement indépendamment de la téléalimentation, tels que T2, le dispositif d'alimentation tel que S2, continue à alimenter le terminal et il n'est donc pas réinitialisé. C'est le cas des ordinateurs personnels, par exemple.

Le concentrateur RPCH de commande de la téléalimentation comporte un dispositif de téléalimentation S30 qui fournit aussi une téléalimentation sur ses ports. Cette téléalimentation pourrait alimenter des terminaux s'il y en avaient qui soient connectés directement sur ces ports, mais elle sert surtout à commander les dispositifs de téléalimentation, tels que S20, dans les trois concentrateurs de répartiteur WCH1, WCH2, WCH3. Le concentrateur RPCH comporte trois commutateurs SW1, SW2, SW3 permettant à un administrateur de commander, sélectivement sur les trois ports, une coupure de la téléalimentation des terminaux et/ou des concentrateurs situés en aval. Ces commutateurs peuvent être des commutateurs mécaniques actionnés manuellement, ou bien des commutateurs électroniques actionnés par un signal électrique de commande de réinitialisation, fourni par une console électronique.

La disparition de la téléalimentation reçue par un dispositif de téléalimentation tel que S20, dans les trois concentrateurs de répartiteur WCH1, WCH2, WCH3, provoque l'arrêt de la téléalimentation fournit par ces concentrateurs ; et par ricochet provoque l'arrêt de la téléalimentation fournie par les concentrateurs de groupe de travail WGH1,..., WGHn. Il est ainsi possible de réinitialiser d'un coup tout les terminaux d'un étage, ou tous les terminaux du réseau, sauf les terminaux alimentés localement indépendamment de la téléalimentation, tels que T2.

Dans d'autres exemples de réalisation, le concentrateur principal RPCH peut être intégré au commutateur Ethernet.

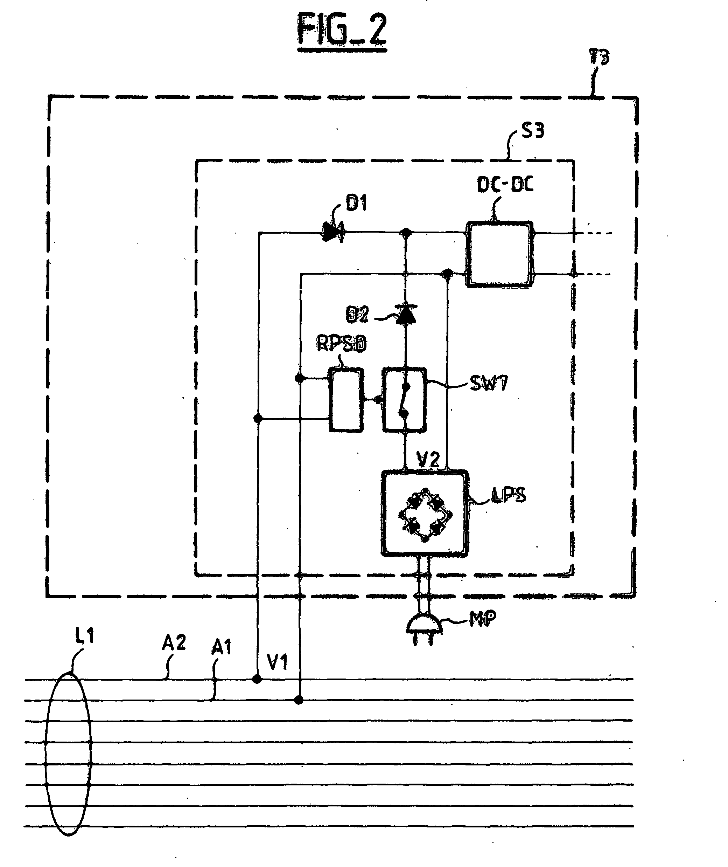

La **figure 2** représente le schéma synoptique d'un exemple de réalisation du terminal selon l'invention. Ce terminal T3 comporte un dispositif d'alimentation S3 qui comporte un convertisseur continu-continu, DC-DC, ayant deux bornes d'entrée. Le convertisseur DC-DC est alimenté habituellement par le secteur arrivant sur une prise secteur MP, au moyen d'un circuit redresseur classique LPS fournissant une tension continue filtrée, V2. En cas de coupure de secteur, il est alimenté par une tension V1 fournie par la téléalimentation, au moyen de deux conducteurs A1, A2 de la ligne L. Cette ligne L comporte six autres conducteurs utilisés notamment pour émettre et recevoir des données.

Le circuit redresseur LPS a deux bornes de sorties dont une est raccordée à une première borne du convertisseur DC-DC et l'autre est raccordée à une seconde borne du convertisseur DC-DC, via un commutateur SW7 et une diode D2. Le conducteur A1 est raccordé directement à la première borne du convertisseur DC-DC, et le conducteur A2 est raccordé à la seconde borne du convertisseur DC-DC, via un commutateur SW7 et une diode D2. Les cathodes des deux diodes D1 et D2 sont toutes les deux raccordées à la seconde borne du convertisseur DC-DC. Un détecteur de téléalimentation, RPSD, a deux bornes raccordées aux conducteurs A1 et A2. Il commande le commutateur SW7 de façon à le fermer lorsque la téléalimentation est fournie par le réseau, et de façon à l'ouvrir lorsque la téléalimentation n'est pas fournie par le réseau, c'est à dire dans le cas où on commande une réinitialisation.

Quand la téléalimentation est fournie, et que le secteur fonctionne, la diode D2 est passante alors que la diode D1 est bloquée parce que la tension de téléalimentation V1 est inférieure à la tension V2 fournie par le redresseur LPS. Le terminal est alors alimenté localement. C'est avantageux pour les terminaux gros consommateurs d'énergie, qui ne peuvent pas être entièrement téléalimentés à cause de la limitation imposée par les caractéristiques de la ligne L.

En cas de coupure de secteur (ou de défaillance du redresseur LPS), la diode D1 est passante. Le terminal T3 est ainsi secouru par la téléalimentation, au moins pour ses fonctions essentielles.

En cas d'interruption de la téléalimentation, au moyen du commutateur SW1 dans le concentrateur RPCH par exemple, le détecteur RPSD commande l'ouverture du commutateur SW7 et empêche ainsi la transmission de l'énergie du redresseur LPS vers le convertisseur DC-DC. Le terminal T3 est donc réinitialisé lors de la reprise de la téléalimentation.

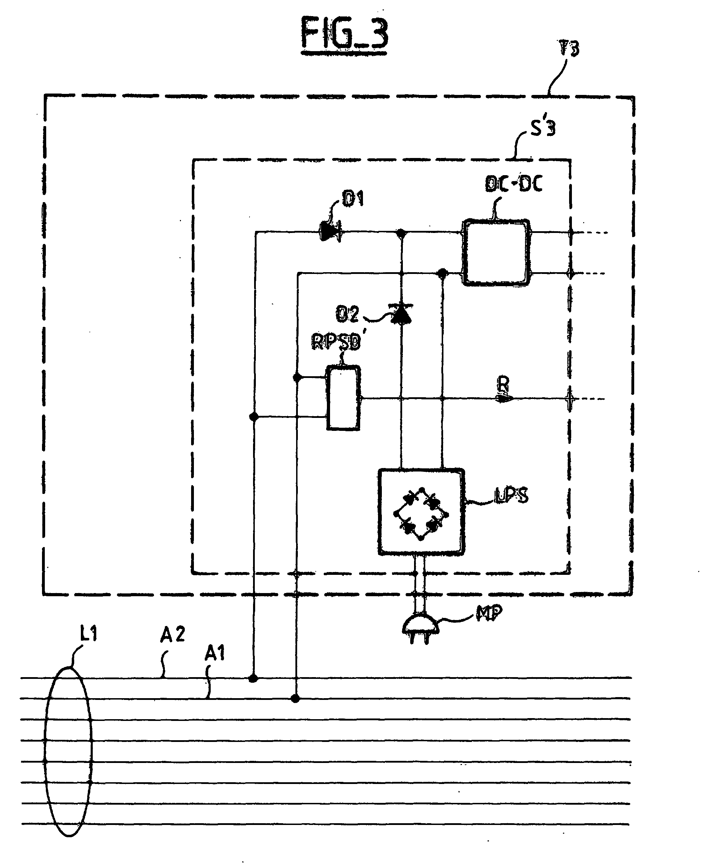

La **figure 3** représente le schéma synoptique d'une variante de cet exemple de réalisation du terminal selon l'invention. Cette variante ne comporte pas de commutateur SW7. Le détecteur RPSD est remplacé par un détecteur RPSD' qui ne fournit pas un signal de commande pour un commutateur, mais fournit un signal logique R à une entrée de réinitialisation d'un processeur (non représenté). Le terminal peut ainsi être réinitialisé sans que son alimentation soit interrompue.

Le procédé selon l'invention est indépendant du type de transmission de données, et du type de téléalimentation utilisés dans le réseau. Il est à la portée de l'Homme de l'Art d'adapter l'exemple de réalisation décrit ci-dessus si la téléalimentation est transmise par le réseau selon un autre procédé, ou si chaque terminal bénéficie d'une ligne qui lui est propre pour le relier à un concentrateur (par exemple pour mettre en oeuvre un procédé de reconnaissance automatique du type de terminal).

## Revendications

1. Procédé pour réinitialiser des terminaux raccordés à un réseau local capable de téléalimenter des terminaux (T1, T3) à partir d'au moins un dispositif de téléalimentation (S10) ;
**caractérisé en ce qu'**il consiste à commander une réinitialisation de terminaux (T3) en utilisant comme signal de commande une coupure de la téléalimentation fournie à ces terminaux par un dispositif de téléalimentation (S10).

2. Procédé selon la revendication 1, **caractérisé en ce que** la coupure de la téléalimentation commande une coupure de toute alimentation (S3) dans un terminal.

3. Procédé selon la revendication 1, **caractérisé en ce que** la coupure de la téléalimentation commande la création d'un signal logique (R) de réinitialisation dans un terminal.

4. Procédé selon l'une des revendications 1 à 3, pour un réseau comportant plusieurs concentrateurs en cascade (RPCH, WCH1, WGH1), ces concentrateurs comportant chacun un dispositif de téléalimentation (S10, S20, S30) ;
**caractérisé en ce qu'**il consiste à commander une coupure de la téléalimentation fournie par un dispositif de téléalimentation (S10) en coupant la téléalimentation fournie à ce dispositif de téléalimentation (S10) par un autre dispositif de téléalimentation (S20) situé en amont.

5. Concentrateur (RPCH ; WCH1 ; WGH1) pour réseau local, capable de réinitialiser des terminaux raccordés à ce réseau local, comportant un dispositif de téléalimentation (S30 ; S20 ; S10) pour téléalimenter des concentrateurs et/ou des terminaux, situés en aval ;
**caractérisé en ce qu'**il comporte en outre des moyens (SW1, SW2, SW3 ; SW4, SW5, SW6 ; D20 ; D10) pour commander une coupure de la téléalimentation des terminaux et/ou des concentrateurs situés en aval.

6. Concentrateur (WCH1 ; WGH1) selon la revendication 5, **caractérisé en ce que** les moyens pour commander une coupure de la téléalimentation des terminaux et/ou des concentrateurs situés en aval comportent des moyens (D20 ; D10) pour détecter la présence d'une téléalimentation fournie par un concentrateur (RPCH ; WCH1) situé en amont dans le réseau, et pour commander son propre dispositif de téléalimentation (S20 ; S10) de façon à couper la téléalimentation qu'il fournit en aval, lorsqu'il ne reçoit plus de téléalimentation.

7. Terminal (T3) susceptible d'être raccordé à un réseau local capable de téléalimenter un terminal en cas de défaillance de l'alimentation locale, ce terminal comportant : un dispositif d'alimentation (S3) comportant des moyens d'alimentation locale (LPS, D2, DC-DC), et des moyens (D1) de couplage au réseau local (L1) ;
**caractérisé en ce qu'**il comporte en outre des moyens de détection (RPSD ; RPSD') pour détecter que ce terminal ne reçoit plus de téléalimentation fournie par le réseau, et des moyens (SW7 ; RPSD') pour réinitialiser ce terminal, lorsque ces moyens de détection (RPSD ; RPSD') détectent que ce terminal ne reçoit plus de téléalimentation fournie par le réseau.

8. terminal selon la revendication 7, **caractérisé en ce que** les moyens pour réinitialiser comportent des moyens (SW7) pour couper l'alimentation locale fournie par les moyens d'alimentation locale (LPS, D2, DC-DC).

9. terminal selon la revendication 7, **caractérisé en ce que** les moyens pour réinitialiser comportent des moyens (RPSD') pour produire un signal logique (R) capable de réinitialiser ce terminal.

## Patentansprüche

1. Verfahren zum Neustart von Endgeräten eines lokalen Netzwerks zur Fernversorgung von Endgeräten (T1, T3), über zumindest eine Fernversorgungsvorrichtung (S10);
**dadurch gekennzeichnet, dass** es die Steuerung eines Neustarts der Endgeräte (T3) umfasst und dass eine Unterbrechung der Fernversorgung dieser Endgeräte, die von einer Fernversorgungsvorrichtung (S10) bedient werden, als entsprechendes Steuersignal eingesetzt wird.

2. Verfahren gemäß Anspruch 1, **dadurch gekennzeichnet, dass** die Unterbrechung der Fernversorgung eine Unterbrechung der gesamten Versorgung (S3) in einem Endgerät auslöst.

3. Verfahren gemäß Anspruch 1, **dadurch gekennzeichnet, dass** die Unterbrechung der Fernversorgung die Bildung eines logischen Neustartsignals (R) in einem Endgerät auslöst.

4. Verfahren gemäß einem der Ansprüche 1 bis 3, das in einem Netzwerk mit mehreren, kaskadenförmig angeordneten Netzwerkverteilern (RPCH, WCH1, WGH1) eingesetzt wird, wobei diese Netzwerkverteiler jeweils eine Fernversorgungsvorrichtung (S10, S20, S30) enthalten;
**dadurch gekennzeichnet, dass** es die Steuerung einer Unterbrechung der Fernversorgung umfasst, die von einer Fernversorgungsvorrichtung (S10) gewährleistet wird, und die erzielt wird, indem die Fernversorgung für diese Vorrichtung (S10) von einer anderen, vorgeschalteten Fernversorgungsvorrichtung (S20) unterbrochen wird.

5. Netzwerkverteiler (RPCH; WCH1; WGH1) für ein lokales Netzwerk zur Versorgung von Endgeräten in diesem Netzwerk, der eine Fernversorgungsvorrichtung (S30; S20; S10) umfasst, die der Versorgung von nachgeschalteten Netzwerkverteilern und/oder Endgeräten dient;
**dadurch gekennzeichnet, dass** er außerdem Elemente enthält (SW1, SW2, SW3; SW4, SW5, SW6; D20; D10), mit denen eine Unterbrechung der Fernversorgung der nachgeschalteten Endgeräte und/oder Netzwerkverteiler gesteuert werden kann.

6. Netzwerkverteiler gemäß Anspruch 5, **dadurch gekennzeichnet, dass** die Elemente zur Steuerung einer Unterbrechung der Fernversorgung der nachgeschalteten Endgeräte und/oder Netzwerkverteiler weitere Elemente (D20; D10) enthalten, die der Erfassung einer aktivierten Fernversorgung dienen, die von einem innerhalb des Netzes vorgeschalteten Netzwerkverteiler (RPCH; WCH1) weitergeleitet wird, sowie der Steuerung der dazugehörigen Fernversorgungsvorrichtung (S20; S10), indem die dem Netzwerkverteiler nachgeschaltete Versorgung unterbrochen wird, sobald er nicht mehr versorgt wird.

7. Endgerät (T3), das in ein lokales Netzwerk integriert werden und ein anderes Endgerät versorgen kann, falls die lokale Stromversorgung ausfällt, dieses Endgerät umfasst folgende Bestandteile: eine Versorgungsvorrichtung (S3), die lokale Stromversorgungselemente (LPS, D2, DC-DC) und Anschlussmöglichkeiten (D1) an das lokale Netzwerk enthält (L1);
**dadurch gekennzeichnet, dass** es außerdem Sensoren (RPSD; RPSD') zur Erfassung einer Versorgungsunterbrechung dieses Endgeräts innerhalb des Netzwerkes enthält, sowie Elemente (SW7; RPSD') zu dessen Neustart, sobald diese Sensoren (RPSD; RPSD') melden, dass dieses Endgerät nicht mehr über das Netzwerk versorgt wird.

8. Endgerät gemäß Anspruch 7, **dadurch gekennzeichnet, dass** die Elemente zum Neustart weitere Schaltelemente (SW7) umfassen, die der Unterbrechung der lokalen Stromversorgung dienen, die von den lokalen Versorgungsvorrichtungen (LPS, D2, DC-DC) gewährleistet wird.

9. Endgerät gemäß Anspruch 7, **dadurch gekennzeichnet, dass** die Elemente zum Neustart weitere Schaltelemente (RPSD') umfassen, die der Bildung eines logischen Signals (R) zum Neustart dieses Endgeräts dienen.

## Claims

1. Method of rebooting terminals connected to a local area network capable of providing a remote power supply to the terminals (T1, T3) from at least one remote power supply unit (S10);
**characterized in that** it consists in commanding rebooting of the terminals (T3) using a command signal consisting of interruption of the remote power supply provided to these terminals by a remote power supply unit (S10).

2. Method according to claim 1 **characterized in that** the interruption of the remote power supply commands interruption of any power supply (S3) in a terminal.

3. Method according to claim 1 **characterized in that** the interruption of the remote power supply commands the creation of a reboot logic signal (R) in a terminal.

4. Method according to any of claims 1 to 3 for a network including a plurality of concentrators in cascade (RPCH, WCH1, WGH1), these concentrators each including a remote power supply unit (S10, S20, S30);
**characterized in that** it consists in commanding interruption of the remote power supply provided by a remote power supply unit (S10) by interrupting the remote power supply provided to this remote power supply unit (S10) by another remote power supply unit (S20) on its upstream side.

5. Concentrator (RCPH; WCH1; WGH1) for a local area network, capable of rebooting terminals connected to this local area network, including a remote power supply unit (S30, S20, S10) for providing a remote power supply to concentrators and/or terminals on its downstream side;
**characterized in that** it also includes means (SW1, SW2, SW3; SW4, SW5, SW6; D20; D10) for commanding interruption of the remote power supply of terminals and/or concentrators on its downstream side.

6. Concentrator (WCH1; WCGH1) according to claim 5 **characterized in that** the means for commanding interruption of the remote power supply of terminals and/or concentrators on its downstream side, includes a means (D20; D10) for detecting a remote power supply provided by a concentrator (RPCH; WCH1) on its upstream side in the network and for commanding its own remote power supply unit (S20; S10) to interrupt the remote power supply which it provides on its downstream side if it is no longer receiving any remote power supply.

7. Terminal (T3) adapted to be connected to a local area network which is adapted to provide a remote power supply to a terminal in the event of failure of its local power supply, this terminal including : a power supply (S3) unit including means for supplying power locally (LPS, D2, DC-DC), coupling means (D1) for coupling it to the local area network (L1);
**characterized in that** it also includes detection means (RPSD; RPSD') for detecting that this terminal is no longer receiving any remote power supply provided by the network, and means (SW7; RPSD') for rebooting this terminal if this detection means detects that this terminal is no longer receiving any remote power supply provided by the network.

8. Terminal according to claim 7 **characterized in that** the rebooting means comprise means (SW7) for interrupting the supply of local power provided by the local power supply means (LPS, D2, DC-DC).

9. Terminal according to claim 7 **characterized in that** the rebooting means comprise means (RPSD') for producing a logic signal (R) capable of rebooting this terminal.
